# EUROPEAN PATENT APPLICATION

(11) **EP 1 209 679 A2**
(43) Date of publication of application: **29.05.2002**
(21) Application number: 01126617.8
(22) Date of filing: 07.11.2001
(51) Int. Cl.: G11B 20/12, G11B 20/14, G11B 27/30, G11B 27/19, G11B 7/00

(54) **Recording apparatus and method for optical recording medium**

(30) Priority: 10.11.2000 JP 2000344147
(71) Applicant: Pioneer Corporation, Meguro-ku, Tokyo (JP)
(72) Inventor: Oishi, Masami, Tokorozawa-city, Saitama (JP); Sakata, Haruyasu, Tokorozawa-city, Saitama (JP); Takata, Shinichi, Tokorozawa-city, Saitama (JP); Hasunuma, Yoshitaka, Tokorozawa-city, Saitama (JP); Tsudome, Hirohisa, Tokorozawa-city, Saitama (JP)
(74) Representative: Manitz, Finsterwald & Partner GbR

(57) **Abstract**

A method for recording an information data signal on an optical recording medium (19) includes the steps of identifying the position of a control data recording area where control data regarding recording of the information data signal is recorded; detecting a pre-pit signal (6,Spp) by reading a predetermined section of the control data recording area: detecting an RF data signal (5,Sdr) by reading a predetermined section of the control data recording area; and executing either one of the step of detecting a pre-pit signal (Spp) and the step of detecting an RF data signal (Sdr) to generate a recording synchronizing signal indicating recording start timing from the detected signal.

## Description

### BACKGROUND OF THE INVENTION

### 1. Field of the invention

The present invention relates to an apparatus and method for recording on an optical recording medium.

### 2. Description of the related art

At present, an optical recording medium having a recording capacity of several gigabytes is in practical use or under development such as a DVD-R (Digital Versatile Disc-Recordable) or a rewritable DVD-RW (DVD-Rewritable). The remarkable improvement of the performance of the mass storage digital optical recording medium and the reproducing apparatus has made it possible to record a vast amount of data with a high quality and almost free from deterioration.

It is, however, possible to easily copy a vast amount of data with a high quality and therefore a protection technique is necessary to prevent the unlawful and illegal copying of the recorded audio/video data, computer programs, etc. The prevention of the illegal copying of the information in the control data recorded area of such an optical disc is now under study.

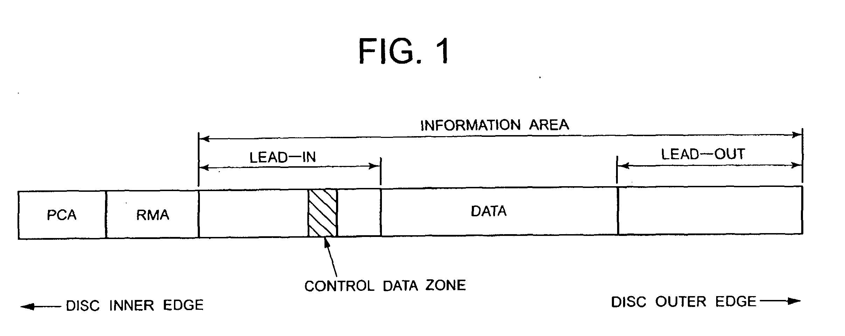

Fig. 1 shows a data structure of a disc such as a DVD-R or a DVD-RW. On such a disc, a PCA (Power Calibration Area) and an RMA (Recording Management Area) are arranged sequentially from the innermost track. The PCA is where trial writing is done to determine the optimal recording-light power. The RMA is where recording management information is written. These areas are followed by an information area containing a lead-in area, a data area and a lead-out area.

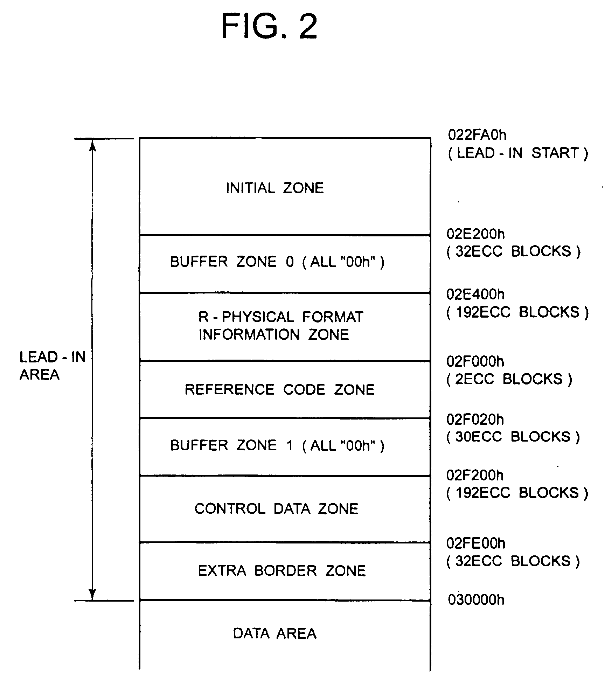

Fig. 2 shows the detailed structure of the lead-in area of a DVD-R disc, as an example. The lead-in area contains an initial zone, a buffer zone, an R-physical format information zone, a reference code zone, and a control data zone. In other words, the lead-in area contains the data required for reproducing the disc. More particularly, the control data zone consists of 192 ECC (Error Correction Code) blocks. The control data zone is the control data recording area which contains recorded control data regarding the record of the above-mentioned recording information data. The control data zone in the lead-in area is connected with the data area through an extra border zone.

The data regarding reproduction are recorded on the R-physical format information zone in the lead-in area when information data are recorded. When the disc is to be read, a reproducing apparatus reads these data, and reproduces the recorded information data such as audio/video data based on the information read out. In this way, recording on the disc and reproducing from the disc are performed.

To prevent the illegal copying of a disc, prewriting in the control data zone in the lead-in area is now being considered. In the future, a readable embossed section to be used for DVD-RWs may be adopted. Because pre-pit information cannot be read from a readable embossed section, studies are under way to make only the last part of the embossed section unreadable so that the pre-pit can be read.

When writing in this area, for a disc on which the control data zone has already been prewritten, writing can be performed in the same way as writing next to a recorded area. However, for a disc on which the control data zone is embossed (i.e., an embossed disc) and the last part is unreadable, it is necessary to perform writing after reading out the pre-pit information, in the same way as writing on an unrecorded section. In the former case it is necessary to perform writing after obtaining an RF read signal, but in the latter case it is necessary to perform writing after obtaining a pre-pit signal. Therefore, there arises a problem that it is impossible to perform the writing process on some types of disc because the recording process is different according to the procedure for recording in the control data recording area of the disc as described above.

### OBJECT AND SUMMARY OF THE INVENTION

The present invention has been made to overcome the above-described problem, and it is an object of the present invention to provide a recording apparatus and recording method which make the recording/reproducing process of a disc possible regardless of the procedure for forming the control data zone.

To achieve the object, according to one aspect of the present invention, there is provided an optical recording apparatus for recording an information data signal on an optical recording medium, which comprises a position identifying portion for identifying the position of a control data recording area where control data regarding recording of the information data signal is recorded; a pre-pit signal detecting portion for reading a predetermined section of the control data recording area to detect a pre-pit signal from the read signal; and a generating portion for generating a recording synchronizing signal indicating recording start timing from the pre-pit signal.

According to another aspect of the present invention, there is provided an optical recording apparatus for recording an information data signal on an optical recording medium, which comprises a position identifying portion for identifying the position of a control data recording area where control data regarding recording of the information data signal is recorded; an RF data signal detecting portion for reading a predetermined section of the control data recording area to detect an RF data signal from the read signal; and a generating portion for generating a recording synchronizing signal indicating recording start timing from the RF data signal.

According to another aspect of the present invention, there is provided an optical recording apparatus for recording an information data signal on an optical recording medium, which comprises a position identifying portion for identifying the position of a control data recording area where control data regarding recording of the information data signal is recorded; a pre-pit signal detecting portion for reading a predetermined section of the control data recording area to detect detecting a pre-pit signal from the read signal; an RF data signal detecting portion for reading a predetermined section of the control data recording area to detect an RF data signal from the read signal; and a selecting portion for.selecting either of the pre-pit signal detecting portion and the RF data signal detecting portion to generate a recording synchronizing signal indicating recording start timing from the detected signal.

According to another aspect of the present invention, there is provided a method for recording an information data signal on an optical recording medium, which comprises the steps of identifying the position of a control data recording area where control data regarding recording of the information data signal is recorded; detecting a pre-pit signal by reading a predetermined section of the control data recording area; and generating a recording synchronizing signal indicating recording start timing from the pre-pit signal.

According to another aspect of the present invention, there is provided a method for recording an information data signal on an optical recording medium, which comprises the steps of identifying the position of a control data recording area where control data regarding recording of the information data signal is recorded; detecting an RF data signal by reading a predetermined section of the control data recording area; and generating a recording synchronizing signal indicating recording start timing from the RF data signal.

According to another aspect of the present invention, there is provided a method for recording an information data signal on an optical recording medium, which comprises the steps of identifying the position of a control data recording area where control data regarding recording of the information data signal is recorded; detecting a pre-pit signal by reading a predetermined section of the control data recording area; detecting an RF data signal by reading a predetermined section of the control data recording area; and executing either one of the step of detecting a pre-pit signal and the step of detecting an RF data signal to generate a recording synchronizing signal indicating recording start timing from the detected signal.

### BRIEF DESCRIPTION OF THE DRAWINGS

Fig. 1 shows a data structure of a DVD disc;
Fig. 2 shows the detailed structure of the lead-in area of a DVD-R disc;
Fig. 3 is a block diagram of the configuration of a recording/reproducing apparatus according to a first embodiment of the present invention;
Fig. 4 is a flowchart of the recording procedure of a recording/reproducing apparatus according to the present invention;
Fig. 5 shows a prewritten control data zone of a DVD disc;
Fig. 6 shows a control data zone in which a part adjacent to the extra border zone is an unreadable embossed section;
Fig. 7 shows a predetermined position and a predetermined section in the control data zone on which the seek and reading processes are performed;
Fig. 8 is a flowchart of the recording procedure of a recording/reproducing apparatus according to a second embodiment of the present invention; and
Fig. 9 is another flowchart of the recording procedure of the recording/reproducing apparatus according to the second embodiment of the present invention.

### DETAILED DESCRIPTION OF THE PREFERRED EMBODIMENTS

The embodiments of the present invention will be described in detail below with reference to the accompanying drawings. In the following description, a recording apparatus for recording information on a DVD-R to which the present invention is applied will be described as an example.

### First Embodiment

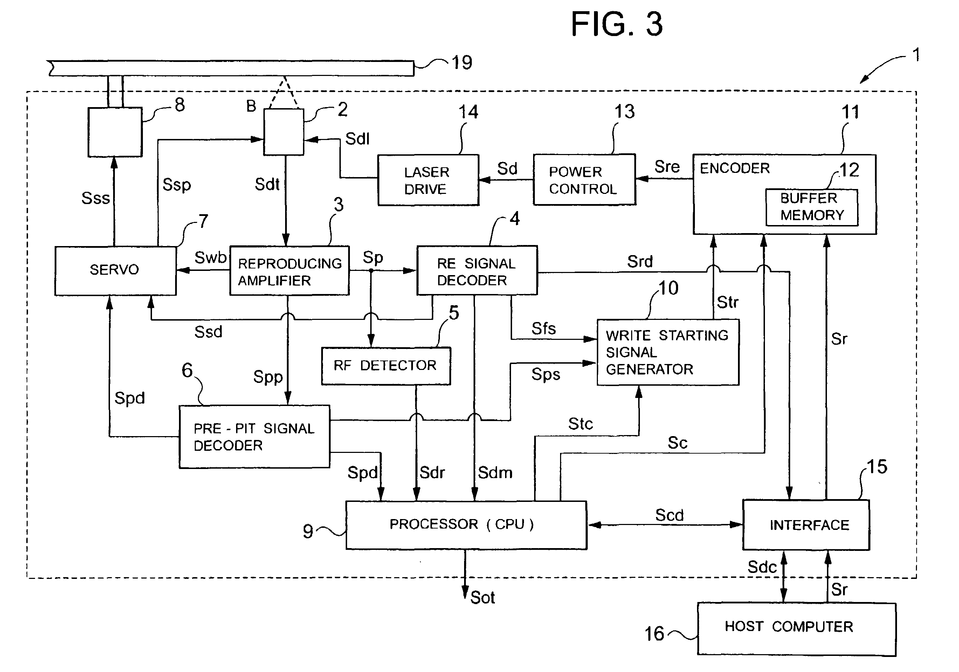

Fig. 3 is a block diagram of the configuration of a recording/reproducing apparatus 1 according to a first embodiment of the present invention. In the following description, the recording/reproducing apparatus 1 for recording and reproducing data on a DVD-R or DVD-RW (hereinafter referred to as a DVD) will be described as an example.

On a DVD 19, pre-pits containing address information etc. of the DVD 19 are previously formed on an information track for recording recording information. When recording information data, the address information on the DVD 19 is previously obtained by detecting the pre-pits. In this way, the recording position at which the recording information is to be recorded is detected.

As shown in Fig. 3, the recording/reproducing apparatus 1 comprises a pickup 2 as a recording resuming means, a reproducing amplifier 3, an RF signal decoder 4, an RF detector 5, a pre-pit signal decoder 6, a servo circuit 7, a spindle motor 8, a processor 9 as a detecting means, stopping means, storage means and recording resuming means, a write starting signal generator 10, an encoder 11 as a recording signal generating means, a power control circuit 13, a laser drive circuit 14, and an interface 15. The recording/reproducing apparatus 1 receives recording information Sdc input from an external host computer 16 through the interface 15. The encoder 11 comprises a buffer memory 12 as a buffer means.

The pickup 2 comprising a laser diode, a polarization beam splitter, an objective lens, a photo detector, etc. (not shown), irradiates a light beam B on the information recording surface of the DVD 19 based on the laser driving signal Sd1. The pickup 2 detects pre-pits based on the reflected light of the light beam B and records an encoding signal Sre to be recorded. If there is some information already recorded, the recorded information is detected based on the reflected light of the light beam B.

The reproducing amplifier 3 amplifies a detecting signal Sdt which contains information corresponding to the pre-pit output from the pickup 2, generates a pre-pit signal Spp corresponding to the pre-pit, and outputs an amplified signal Sp which corresponds to the recording information which is already recorded.

The decoder 4 decodes the amplified signal Sp by performing 8-16 demodulation and de-interleave on the amplified signal Sp to generate a demodulating signal Sdm and a servo demodulating signal Ssd.

The RF detector 5 detects an RF signal from the amplified signal Sp and supplies the detected RF signal Sdr to the processor 9.

The pre-pit signal decoder 6 decodes the pre-pit signal Spp to generate a demodulated pre-pit signal Spd. The servo circuit 7 generates a pickup servo signal Ssp for focus servo control and tracking servo control for the pickup 2 based on the demodulated pre-pit signal Spd, a wobble signal Swb, and a servo demodulating signal Ssd. The servo circuit 7 also generates a spindle servo signal Sss for servo control of the rotation of the spindle motor 8 for rotating the DVD 19, and then outputs the generated signals.

Keeping pace with such operation, the processor 9 generates a recording trigger control signal Stc based on the pre-pit signal Spd and the detected RF signal Sdr to send it to the write starting signal generator 10. The processor 9 sends and receives a drive control data signal Scd to and from the interface 15. The processor 9 controls the overall recording/reproducing operation of the recording/reproducing apparatus 1.

The interface 15 performs the interface operation for the recording information Sr sent from the host computer 16 for use by the recording/reproducing apparatus 1 under the control of the processor 9, and outputs the recording information Sr to the encoder 11.

The encoder 11 comprises an ECC generator, an 8-16 demodulator, a scrambler, and a buffer memory 12 (which are not shown), and forms an ECC block 30 by adding an ECC internal code 31 and an ECC external code 32 to the recording information Sr. The encoder 11 performs the processes of interleave, 8-16 demodulation, and scrambling on the ECC block 30 to generate an encoding signal Sre. At this time, the buffer memory 12 contained in the encoder 11 temporarily stores the recording information Sr from the host computer 16 based on a buffer control signal Sc from the processor 9, and outputs the recording information Sr at a reading speed corresponding to the recording speed at which the pickup 2 records the encoding signal Sre onto the DVD 19.

The power control circuit 13 generates and outputs a driving signal Sd for controlling the output of the laser diode (not shown) in the pickup 2 based on the encoding signal Sre.

After that, the laser drive circuit 14 supplies the laser driving signal Sd1 to the pickup 2 for driving the laser diode so as to make it emit the light beam B based on the driving signal Sd.

The above-mentioned recording/reproducing apparatus 1 is also capable of reproducing information recorded on the DVD 19. In this case, a reproducing signal Sot is supplied to an external apparatus through the processor 9 based on the demodulated signal Sdm.

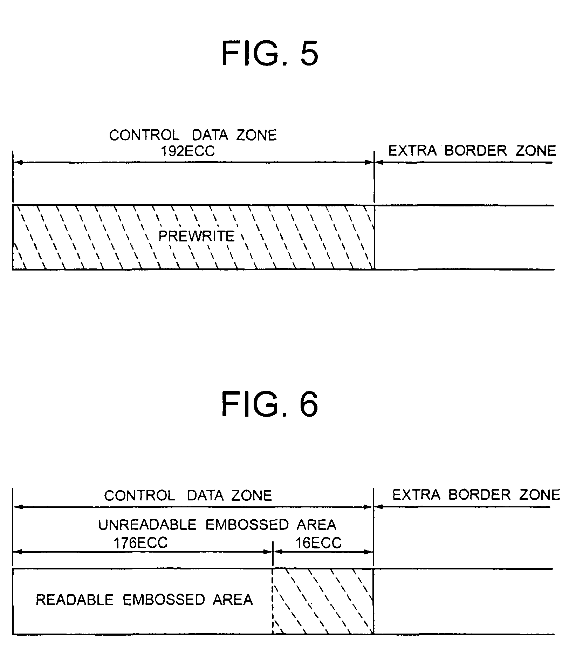

As shown in Fig. 5, the control data zone, which is the control data recording area of the DVD 19, is prewritten at the time of shipment. In the prewritten section, an RF signal can be read but a pre-pit is comparatively hard to read. As shown in Fig. 6, the end of the control data zone, that is, the portion adjacent to the extra border zone (for example, 16 ECC blocks) is an unreadable embossed section where an RF signal cannot be read but a pre-pit signal is obtainable. In this case, the remaining part of the control data zone (that is, 176 ECC blocks) is made to be a readable embossed section.

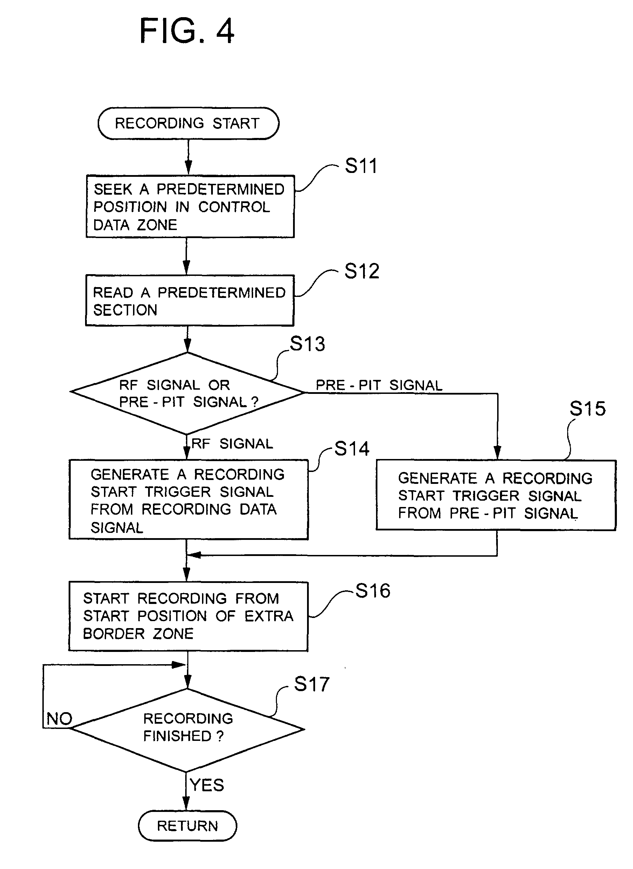

The recording procedure of the above-mentioned recording/reproducing apparatus 1 will be described in detail with reference to the flowchart shown in Fig. 4. The recording operation is executed under the control of the processor 9 when recording is carried out on the extra border zone.

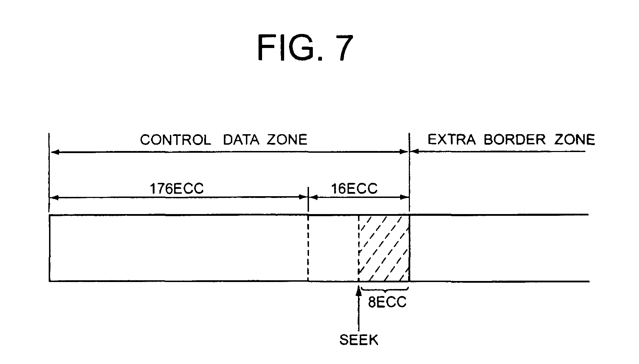

The processor 9 executes control for seeking a predetermined position in the control data zone based on the address of the control data zone (Step S11). As shown in Fig. 7, the predetermined position is the start position of a predetermined section (for example, 8 ECC blocks) adjacent to the extra border zone. The predetermined section is then read (Step S12). The processor 9 determines whether the RF data signal (hereinafter, also simply referred to as an RF signal) is detected or a pre-pit signal is detected in the read signal based on the signals from the RF signal decoder 4, the RF detector 5, and the pre-pit signal decoder 6 (Step S13).

If it is determined that an RF signal is detected, a synchronizing signal (trigger signal) indicating the recording start timing is generated from the recorded data signal (RF signal) in the write starting signal generator 10 (Step S14). If it is determined that a pre-pit signal is detected, a record starting trigger signal is generated from the pre-pit signal in the write starting signal generator 10 (Step S15).

The processor 9 starts recording from the start position of the extra border zone at the recording start timing while confirming that synchronization is maintained (Step S16). In the extra border zone, management information data such as border information (extra border information) showing addresses regarding the delimiting positions of the recording data in the data area, copies of the RMD (Recording Management Data), etc, are recorded. Recording is performed all over the extra border zone so as not to leave any unrecorded area in order to make tracing possible when the disk is reproduced.

Whether or not all-over recording is completed is determined (Step S17). When the recording is finished, control is returned to the main routine.

Therefore, even though the control data zone is prewritten or a readable embossed section, recording in the area adjacent to this zone is possible.

As described above, recording in the extra border zone is performed after a detecting signal from a predetermined section of the control data zone is determined. However, the above-mentioned procedure need not be performed before recording the recording information data (audio data, video data, etc.) in the data area, but may be performed after recording the recording information data.

As a modification of the embodiment, various arrangements can be devised. For example, although the embodiment is described as having units for determining both an RF signal and a pre-pit signal, a configuration having only either one of the units will also do the purpose. For example, when there is a means for determining only a pre-pit signal and no pre-pit signal is detected, a procedure may be designed to generate a record starting trigger signal from an RF signal without determining whether or not an RF signal is detected.

### Second Embodiment

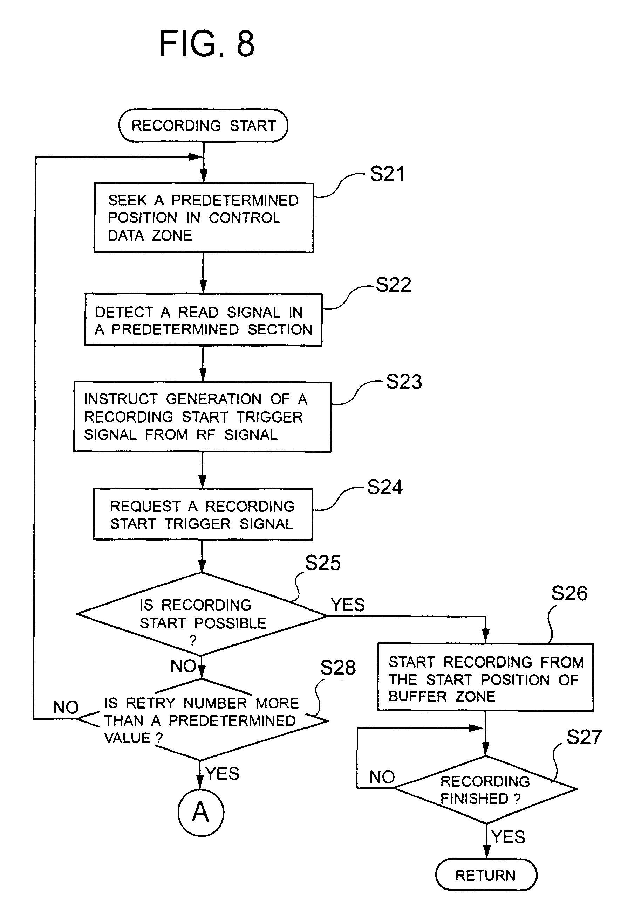

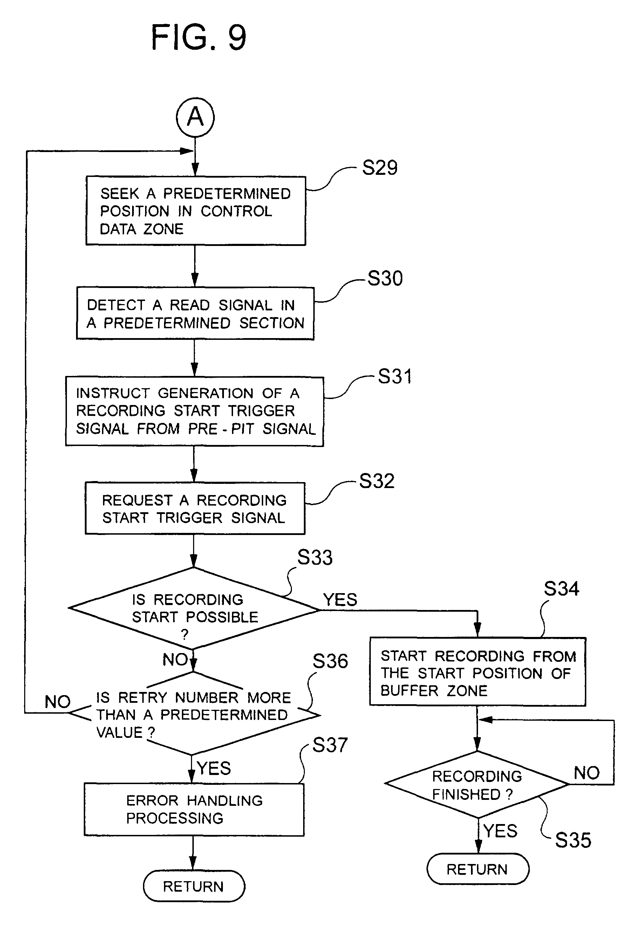

Figs. 8 and 9 are flowcharts of the recording procedure of a recording/reproducing apparatus 1 according to a second embodiment of the present invention.

The processor 9 executes control for seeking a predetermined position in the control data zone based on the address of the control data zone (Step S21). The predetermined position is the start position of a predetermined section adjacent to the extra border zone, similar to the case of the first embodiment. The predetermined section is then read and the read signal is detected (Step S22).

The processor 9 instructs the write starting signal generator 10 to generate a record starting trigger signal from the RF signal of the read signal (Step S23). The processor 9 waits for a recording start timing while confirming that synchronization is maintained. If synchronization is maintained, the processor 9 requires a record starting trigger signal from the write starting signal generator 10 at a predetermined timing (Step S24). Whether or not recording start is possible is then determined (Step S25). More specifically, in the determining step, recording start is determined to be possible if a record starting trigger signal is output from the write starting signal generator 10 in response to the output request for a trigger signal. On the other hand, recording start is determined to be impossible if a clock is not obtained based on the signal from the RF signal decoder 4 in the write starting signal generator 10 and no record starting trigger signal is output from the write starting signal generator 10.

In step S25, if it is so determined that recording start is possible, recording is started from the start position of the extra border zone based on the record starting trigger signal (Step S26). Whether or not recording is finished is determined (Step S27). When recording is finished, control is returned to the main routine.

In step S25, if it is determined that recording start is impossible, the number of retries is determined (Step S28). If the number of retries has not reached a predetermined number, control goes back to step S21 and the above-mentioned procedure is repeated. If the number of retries exceeds the predetermined number, control goes to step S29.

The processor 9 executes control for seeking a predetermined position in the control data zone based on the address of the control data zone (Step S29). The predetermined section is then read and the read signal is detected (Step S30).

The processor 9 instructs the write starting signal generator 10 to generate a record starting trigger signal from the pre-pit signal of the read signal (Step S31). The processor 9 waits for a recording start timing while confirming that synchronization is maintained. If synchronization is maintained, the processor 9 requires a record starting trigger signal from the write starting signal generator 10 at the predetermined timing (Step S32). Whether or not recording start is possible is determined next (Step S33). In this determining step, whether or not a record starting trigger signal is output from the write starting signal generator 10 in response to the output request for a trigger signal is determined in the same way as that mentioned above. Recording start is determined to be impossible if a clock is not obtained in the write starting signal generator 10 based on the pre-pit signal from the pre-pit signal decoder 6 and no record starting trigger signal is output from the write starting signal generator 10.

In step S33, if it is determined that recording start is possible, recording is started from the start position of the extra border zone in response to the record starting trigger signal (Step S34). Whether or not recording is finished is determined (Step S35). When recording is finished, control is returned to the main routine.

In step S33, if it is determined that recording start is impossible, the number of retries is determined (Step S36). If the number of retries has not reached a predetermined number, control goes back to step S29 and the above-mentioned procedure is repeated. If the number of retries exceeds the predetermined number, a predetermined error handling process is executed (Step S37) and control is returned to the main routine.

Therefore, even though the control data zone is prewritten or even though it is formed by a readable embossed area, recording in the area adjacent to this zone is possible.

As a modification of the embodiment, various arrangements can be devised. In the embodiment described above, recording is retried for a predetermined number of times if recording start is determined to be impossible, and the method for generating a trigger signal is switched if recording is still impossible even after retrying for the predetermined number of times (that is, switched from trigger signal generation by means of an RF signal to trigger signal generation by means of a pre-pit signal). The present invention, however, is not limited to this case. For example, a method for switching from trigger signal generation by means of a pre-pit signal to trigger signal generation by means of an RF signal may be used. It is also possible to switch to another method for generating a trigger signal when recording is impossible and to further change the trigger signal generating method if recording is still impossible, without performing recording retrying by the same trigger signal generating method.

### Third Embodiment

In this embodiment, disc identification information which indicates that the control data zone is prewritten or the control data zone is formed on a readable embossed area is recorded at a predetermined position in the lead-in area of the disc 19. For example, the predetermined position is a "Part version field" in field ID1 of the pre-pit where "0100b" designates a prewritten disc and "0101b" designates a disc in which embossing is used for writing.

The recording/reproducing apparatus may be so configured that it further includes a means for identifying the predetermined position where the disc identification information is recorded, and a means for obtaining the disc identification information from the predetermined position to determine the content of the disc identification information.

Therefore, a recording/reproducing apparatus which can write data on discs of both types can be achieved by checking the data in an area where the disc identification information is recorded and selecting a trigger signal generation method for the writing process immediately after the control data zone based on the results of the data check.

In the various embodiments described above, whether or not an RF data signal was detected by reading a predetermined section can be determined by whether or not recorded ID (identification) information can be read. Specifically, if the ID read number in the predetermined section is counted and the ID number exceeds a certain number, it can be determined that the RF signal was read out. That is, it is determined that the predetermined section is a prewritten area and such area can be written after obtaining the synchronizing information from the RF signal.

If the error rate of the pre-pit of a signal read out is less than a predetermined value, it can be determined that a pre-pit signal could be detected by reading the predetermined section and read out. Or, any value corresponding to the error rate of the pre-pit can be used. For example, if the read number of the pre-pit of a certain time period is above a certain value, it can be determined that the pre-pit signal was read out.

In addition, in the embodiments described above, whether a signal is an RF signal or a pre-pit signal can be identified by a conventional signal processing process, for example, by comparing the intensity of the detected signal with a predetermined threshold value, or by identifying a characteristic value such as the frequency of the detected signal, pulse width, etc.

The above-described embodiments are only for exemplary purposes. They can be combined in various ways. The values etc. in these embodiments are for exemplary purposes only. They can be adequately modified in application.

Moreover, in the above-described embodiments, a DVD-R is used as an example of the optical recording medium. However, the present invention is not limited to DVD-Rs, but is applicable to any other optical recording medium.

As is apparent from the above description, according to the present invention, a recording/reproducing apparatus which can record and reproduce data regardless of the control data zone forming procedure of the disc can be achieved.

The invention has been described with reference to the preferred embodiments thereof. It should be understood by those skilled in the art that a variety of alterations and modifications may be made from the embodiments described above. It is therefore contemplated that the appended claims encompass all such alterations and modifications.

## Claims

1. An optical recording apparatus for recording an information data signal on an optical recording medium, comprising:
a position identifying portion for identifying the position of a control data recording area where control data regarding recording of said information data signal is recorded;
a pre-pit signal detecting portion for reading a predetermined section of said control data recording area to detect a pre-pit signal from the read signal; and
a generating portion for generating a recording synchronizing signal indicating recording start timing from said pre-pit signal.

2. An optical recording apparatus for recording an information data signal on an optical recording medium, comprising:
a position identifying portion for identifying the position of a control data recording area where control data regarding recording of said information data signal is recorded;
an RF data signal detecting portion for reading a predetermined section of said control data recording area to detect an RF data signal from the read signal; and
a generating portion for generating a recording synchronizing signal indicating recording start timing from said RF data signal.

3. An optical recording apparatus for recording an information data signal on an optical recording medium, comprising:
a position identifying portion for identifying the position of a control data recording area where control data regarding recording of said information data signal is recorded;
a pre-pit signal detecting portion for reading a predetermined section of said control data recording area to detect detecting a pre-pit signal from the read signal;
an RF data signal detecting portion for reading a predetermined section of said control data recording area to detect an RF data signal from the read signal; and
a selecting portion for selecting either of said pre-pit signal detecting portion and said RF data signal detecting portion to generate a recording synchronizing signal indicating recording start timing from the detected signal.

4. An optical recording apparatus according to claim 1, comprising a recording portion for recording predetermined management information in an area adjacent to said control data recording area in response to said recording synchronizing signal.

5. An optical recording apparatus according to claim 1, wherein said predetermined section is positioned at the end of said control data recording area.

6. A method for recording an information data signal on an optical recording medium, comprising the steps of:
identifying the position of a control data recording area where control data regarding recording of said information data signal is recorded;
detecting a pre-pit signal by reading a predetermined section of said control data recording area; and
generating a recording synchronizing signal indicating recording start timing from said pre-pit signal.

7. A method for recording an information data signal on an optical recording medium, comprising the steps of:
identifying the position of a control data recording area where control data regarding recording of said information data signal is recorded;
detecting an RF data signal by reading a predetermined section of said control data recording area; and
generating a recording synchronizing signal indicating recording start timing from said RF data signal.

8. A method for recording an information data signal on an optical recording medium, comprising the steps of:
identifying the position of a control data recording area where control data regarding recording of said information data signal is recorded;
detecting a pre-pit signal by reading a predetermined section of said control data recording area;
detecting an RF data signal by reading a predetermined section of said control data recording area; and
executing either one of the step of detecting a pre-pit signal and the step *of* detecting an RF data signal to generate a recording synchronizing signal indicating recording start timing from the detected signal.
